# EUROPEAN PATENT APPLICATION

(11) **EP 3 690 203 A1**
(43) Date of publication of application: **05.08.2020**
(21) Application number: 20150211.9
(22) Date of filing: 03.01.2020
(51) Int. Cl.: F01D 25/28

(54) **SYSTEM AND METHOD FOR ASSEMBLING COMPONENTS OF A GAS TURBINE ENGINE**

(30) Priority: 01.02.2019 GB 201901396
(71) Applicant: Rolls-Royce plc, London N1 9FX (GB)
(72) Inventor: Cooper, Joseph, Derby, Derbyshire DE24 8BJ (GB)
(74) Representative: Rolls-Royce plc

(57) **Abstract**

A system and a method for assembling a core engine and a fan case of a gas turbine engine. The system includes a core engine support (202) that detachably supports the core engine (128). The core engine support includes at least one core engine alignment sensor (208). The system further includes a fan case support (204) that detachably supports the fan case (130). The fan case support includes at least one fan case alignment sensor (210). The system further includes a computer-controllable unit (206) configured to align the core engine support and the fan case support based on signals from the at least one core engine alignment sensor and the at least one fan case alignment sensor. The computer-controllable unit is further configured to guide a movement of at least one of the core engine support and the fan case support to couple the core engine with the fan case.

## Description

### Field of the disclosure

The present disclosure concerns a system and a method for assembling components of a gas turbine engine.

### Background

A gas turbine engine with bypass (i.e., a turbofan) typically includes a fan case and a core engine. The fan case and the core engine have to be assembled with each other during manufacture. The fan case and the core engine may subsequently be separated for carrying out various tasks, such as servicing, repair and replacement of one or more components. Generally, the fan case and the core engine have to be accurately aligned and levelled before assembly. The assembling process is typically performed manually. Small clearances between components make such manual assembly difficult and time consuming. Manual assembly may further increase a risk of misalignment and damage during assembly. Additionally, manual assembly can only be performed in a workshop environment with a substantially even ground surface.

A need remains for an improved system for assembling a core engine and a fan case of a gas turbine engine or at least a system that provides a useful alternative to known systems for assembling a core engine and a fan case of a gas turbine engine.

### Summary

The present disclosure provides a system for assembling a core engine and a fan case of a gas turbine engine, a computer-controlled method of assembling a core engine and a fan case of a gas turbine engine, and a gas turbine engine, as set out in the appended claims.

According to a first aspect there is provided a system for assembling a core engine and a fan case of a gas turbine engine, the system comprising:
a core engine support that detachably supports the core engine, the core engine support comprising at least one core engine alignment sensor;
a fan case support that detachably supports the fan case, the fan case support comprising at least one fan case alignment sensor; and
a computer-controllable unit configured to:
   align the core engine support and the fan case support based on signals from the at least one core engine alignment sensor and the at least one fan case alignment sensor; and
   guide a movement of at least one of the core engine support and the fan case support to couple the core engine with the fan case.

The system including the computer-controllable unit may provide automated alignment and guidance of the core engine and the fan case during assembly. Automated alignment and guidance may enable the assembling process to be efficient, reliable, consistent and quicker with minimal manpower requirements as compared to conventional manual processes. Automated alignment and guidance may also allow small clearances to be accurately provided between the core engine and the fan case. The system may allow assembly to be performed on uneven surfaces at locations remote from a workshop environment. The system may improve engine assembly efficiency and reduce the risk of misalignment and damage during assembly. The time saved due to use of the system may allow personnel to work on other important tasks, such as servicing, repair and/or replacement of one or more components. The system may be especially useful for assembling turbofan engines that have a high bypass ratio.

In some cases, the assembly of the core engine and the fan case may be performed during manufacture of the gas turbine engine. In some other cases, the assembly of the core engine and the fan case may be performed after separating the core engine and the fan case for carrying out various tasks, such as servicing, repair and replacement of one or more components. The system including the computer-controllable unit may also be used to separate the core engine and the fan case.

In some embodiments, the computer-controllable unit may further comprise a height adjustment mechanism for adjusting a height of at least one of the core engine support and the fan case support, and a controller that controls the height adjustment mechanism based on the signals from the at least one core engine alignment sensor and the at least one fan case alignment sensor in order to align the core engine support and the fan case support. The height adjustment mechanism may allow automated alignment and levelling of the core engine support and/or the fan case support.

In some embodiments, the height adjustment mechanism may comprise one or more of a hydraulic actuator, a pneumatic actuator and an electrical actuator. In some embodiments, the height adjustment mechanism may comprise at least one of a worm drive and a rack and pinion arrangement. The configuration of the height adjustment mechanism may be varied to suit the particular application.

In some embodiments, the computer-controllable unit may further comprise a movement mechanism for moving at least one of the core engine support and the fan case support. The controller may control the movement mechanism to guide the movement of at least one of the core engine support and the fan case support in order to couple the core engine with the fan case. The movement mechanism may enable automated guidance of the core engine support and/or the fan case support.

In some embodiments, the movement mechanism may further comprise a drive arrangement controllable by the controller and a plurality of wheels operatively coupled to the drive arrangement. The configuration of the movement mechanism may be varied to suit the particular application.

In some embodiments, the core engine support may further comprise at least one core engine level sensor. The computer-controllable unit may level the core engine support with respect to one or more axes based on signals from the at least one core engine level sensor. The at least one core engine level sensor may enable self-levelling of the core engine support.

In some embodiments, the at least one core engine level sensor may be a gyroscope. The at least one core engine level sensor may be chosen based on the particular application.

In some embodiments, the fan case support may further comprise at least one fan case level sensor. The computer-controllable unit may level the fan case support with respect to one or more axes based on signals from the at least one fan case level sensor. The at least one fan case level sensor may enable self-levelling of the fan case support.

In some embodiments, the at least one fan case level sensor may be a gyroscope. The at least one fan case level sensor may be chosen based on the particular application.

In some embodiments, the at least one core engine alignment sensor may be a laser alignment sensor. The at least one core engine alignment sensor may be chosen based on the particular application.

In some embodiments, the at least one fan case alignment sensor may be a laser alignment sensor. The at least one fan case alignment sensor may be chosen based on the particular application.

According to a second aspect there is provided a computer-controlled method of assembling a core engine and a fan case of a gas turbine engine, the computer-controlled method comprising the steps of:
aligning a core engine support that detachably supports the core engine and a fan case support that detachably supports the fan case based on signals from at least one core engine alignment sensor and at least one fan case alignment sensor respectively; and
guiding a movement of at least one of the core engine support and the fan case support to couple the core engine with the fan case.

The computer-controlled method may provide automated alignment and guidance of the core engine and the fan case during assembly. Automated alignment and guidance may enable the assembling process to be efficient, reliable, consistent and faster with minimal manpower requirements as compared to conventional manual processes.

In some embodiments, the computer-controlled method may further comprise levelling at least one of the core engine support and the fan case support with respect to one or more axes. This may allow self-levelling of the core engine support and/or the fan case support.

Further, the computer-controlled method of the second aspect of the invention may use the system of the first aspect of the invention and may have any of the features discussed in the first aspect.

According to a third aspect there is provided a gas turbine engine assembled by the computer-controlled method of the second aspect.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief description of the drawings

Embodiments will now be described by way of example only, with reference to the Figures, in which:
**Figure 1** is a sectional side view of a gas turbine engine;
**Figure 2** is a side view of a system for assembling a core engine and a fan case of the gas turbine engine;
**Figure 3** is a block diagram of the system of Figure 2; and
**Figure 4** is a flowchart of a computer-controlled method of assembling the core engine and the fan case of the gas turbine engine.

### Detailed description

Aspects and embodiments of the present disclosure will now be discussed with reference to the accompanying figures. Further aspects and embodiments will be apparent to those skilled in the art.

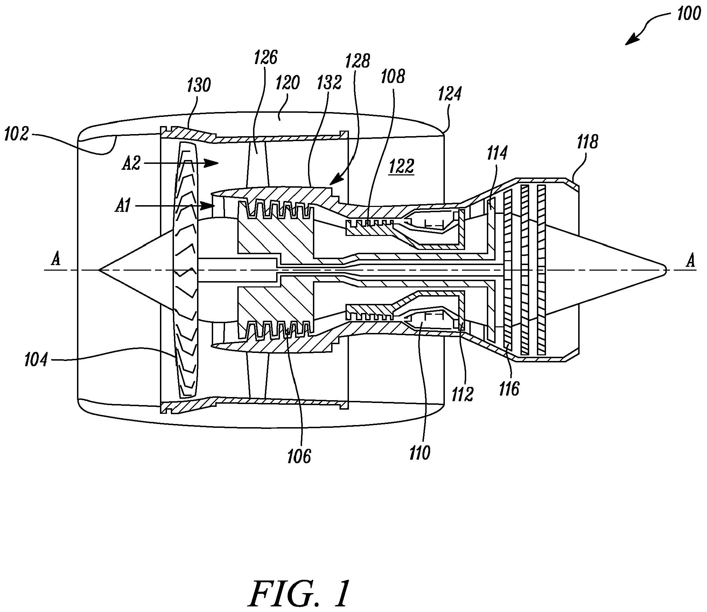

With reference to **Figure 1****,** a gas turbine engine is generally indicated at 100, having a principal and rotational axis A-A. The gas turbine engine 100 comprises, in axial flow series, an air intake 102, a propulsive fan 104, an intermediate pressure compressor 106, a high-pressure compressor 108, combustion equipment 110, a high-pressure turbine 112, an intermediate pressure turbine 114, a low-pressure turbine 116 and a core engine exhaust nozzle 118. A nacelle 120 generally surrounds the gas turbine engine 100 and defines the air intake 102, a bypass duct 122 and a bypass exhaust nozzle 124. A row of guide vanes 126 is positioned in the bypass duct 122 rearward of the propulsive fan 104.

During operation, air entering the air intake 102 is accelerated by the propulsive fan 104 to produce two air flows: a first air flow "A1" into the intermediate pressure compressor 106 and a second air flow "A2" which passes through the bypass duct 122 to provide propulsive thrust. The intermediate pressure compressor 106 compresses the air flow directed into it before delivering that air to the high-pressure compressor 108 where further compression takes place.

The compressed air exhausted from the high-pressure compressor 108 is directed into the combustion equipment 110 where it is mixed with fuel and the mixture combusted. The resultant hot combustion products then expand through, and thereby drive the high, intermediate and low-pressure turbines 112, 114, 116 before being exhausted through the core engine exhaust nozzle 118 to provide additional propulsive thrust. The high, intermediate and low pressure turbines 112, 114, 116 drive respectively the high-pressure compressor 108, the intermediate pressure compressor 106 and the propulsive fan 104, each by suitable interconnecting shaft and/or gear train.

The gas turbine engine 100 further includes a core engine 128 and a fan case 130. The core engine 128 includes various components, such as the intermediate pressure compressor 106, the high-pressure compressor 108, the combustion equipment 110, the high-pressure turbine 112, the intermediate pressure turbine 114, the low-pressure turbine 116 and the core engine exhaust nozzle 118. The core engine 128 further includes an engine casing 132 for at least partially enclosing various components of the core engine 128. The fan case 130 is disposed around the core engine 128. The fan case 130 surrounds the propulsive fan 104 and the guide vanes 126. In some embodiments, the fan case 130 is coupled to the core engine 128 and/or the nacelle 120 by various methods, such as fasteners (e.g., bolts), welding, brazing, and so forth.

The gas turbine engine 100 illustrated in Figure 1 is exemplary in nature. Other gas turbine engines to which the present disclosure may be applied may have alternative configurations. By way of example, such engines may have an alternative number of interconnecting shafts (e.g. two) and/or an alternative number of compressors and/or turbines. Further the engine may comprise a gearbox provided in a drive train from a turbine to a compressor and/or fan. The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above. The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

The gas turbine engine 100 is typically assembled in sections and these sections are then assembled to form the gas turbine engine 100. For example, the core engine 128 and the fan case 130 are assembled separately and then connected to each other. The fan case 130 is generally coaxially disposed around the core engine 128. Specifically, the core engine 128 and the fan case 130 may be coaxially disposed about the axis A-A. Correct alignment between the core engine 128 and the fan case 130 may be required before the core engine 128 and the fan case 130 are moved proximal to each other and connected.

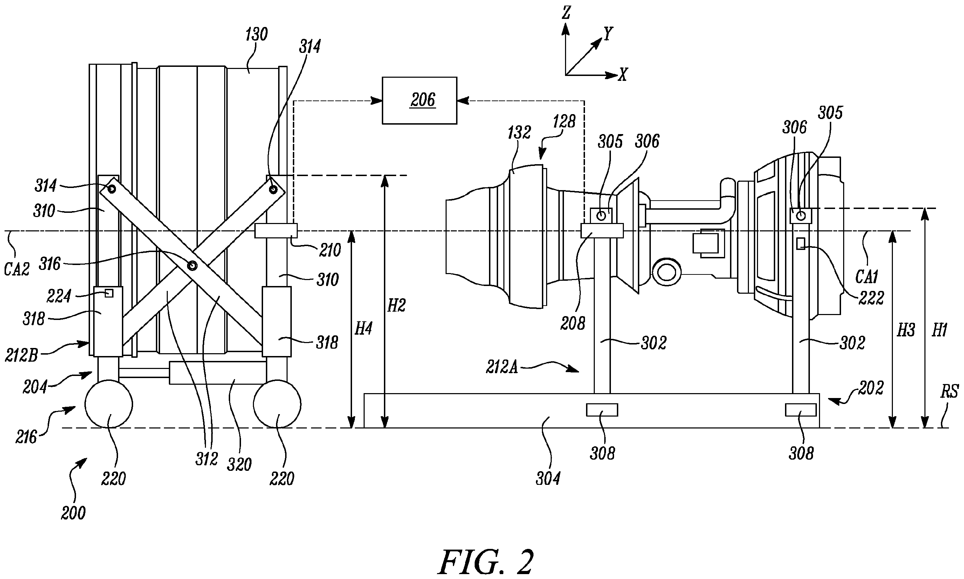

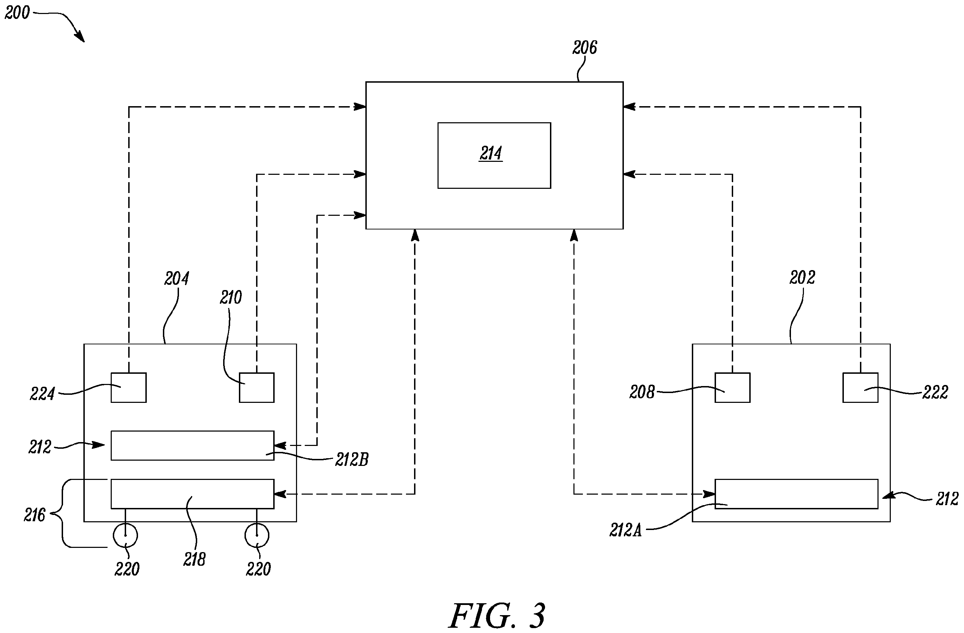

**Figure** 2 illustrates a system 200 for assembling the core engine 128 and the fan case 130 of the gas turbine engine 100. **Figure** 3 illustrates a block diagram of the system 200. Referring to Figures 2 and 3, the system 200 includes a core engine support 202, a fan case support 204 and a computer-controllable unit 206. The core engine support 202 detachably supports the core engine 128. The core engine support 202 further includes at least one core engine alignment sensor 208 (interchangeably referred to as "the core engine alignment sensor 208"). The fan case support 204 detachably supports the fan case 130. The fan case support 204 includes at least one fan case alignment sensor 210 (interchangeably referred to as "the fan case alignment sensor 210"). The computer-controllable unit 206 is communicably coupled to the at least one core engine alignment sensor 208 and the at least one fan case alignment sensor 210. The computer-controllable unit 206 is configured to align the core engine support 202 and the fan case support 204 based on signals from the at least one core engine alignment sensor 208 and the at least one fan case alignment sensor 210. The computer-controllable unit 206 is further configured to guide a movement of at least one of the core engine support 202 and the fan case support 204 to couple the core engine 128 with the fan case 130.

The computer-controllable unit 206 further includes a height adjustment mechanism 212 (shown in Figure 3) for adjusting a height of at least one of the core engine support 202 and the fan case support 204. The computer-controllable unit 206 further includes a controller 214 (shown in Figure 3) that controls the height adjustment mechanism 212 based on the signals from the at least one core engine alignment sensor 208 and the at least one fan case alignment sensor 210 in order to align the core engine support 202 and the fan case support 204. In some embodiments, the height adjustment mechanism 212 includes one or more of a hydraulic actuator, a pneumatic actuator and an electrical actuator. In some embodiments, the height adjustment mechanism 212 includes at least one of a worm drive and a rack and pinion arrangement. In the illustrated embodiment, the height adjustment mechanism 212 includes a first height adjustment mechanism 212A for adjusting the height "H1" of the core engine support 202 and a second height adjustment mechanism 212B for adjusting the height "H2" of the fan case support 204. The height "H1" may be substantially equal to a distance between two ends of the core engine support 202 along Z-axis. Similarly, the height "H2" may be substantially equal to a distance between two ends of the fan case support 204 along the Z-axis.

The core engine support 202 includes multiple elongate members 302 extending from and connected to a base member 304. The height "H1" of the core engine support 202 may be substantially equal to a height of a distal end of each elongate member 302 with respect to the base member 304. The base member 304 may have a substantially planar configuration to support the elongate members 302. The core engine support 202 may include any suitable number of elongate members 302 to support the core engine 128. The elongate members 302 are detachably connected to the core engine 128 via respective fasteners 305 (such as, bolts) and respective support brackets 306. However, the elongate members 302 may detachably support the core engine 128 via any other method, for example, grippers, a support platform, and so forth. The elongate members 302 may be attached to the engine casing 132. Further, one of the elongate members 302 may be connected to a front part of the core engine 128, while another elongate member 302 may be connected to a rear part of the core engine 128. Each of the elongate members 302 may have any suitable cross-sectional shape, such as circular, elliptical, polygonal, and so forth. Further, each of the elongate members 302 may be solid or hollow members.

The elongate members 302 support the core engine 128 at a height "H3" relative to a reference surface "RS". The reference surface "RS" may be a surface of a ground or a floor. The height "H3" may be the height of a centre axis "CA1" of the core engine 128 relative to the reference surface "RS". The centre axis "CA1" may be disposed along X-axis. In some embodiments, a length of each of the elongate members 302 is adjustable such that the height "H1" of the core engine support 202 and the height "H3" of the core engine 128 are adjustable. The elongate members 302 are therefore adjustable along Z-axis. In some embodiments, the elongate members 302 are telescopic members so that their lengths are adjustable. The elongate members 302 are part of the first height adjustment mechanism 212A. The computer-controllable unit 206 is configured to adjust the lengths of the elongate members 302 based on the signals received from the core engine alignment sensor 208 and/or the fan case alignment sensor 210. Specifically, the controller 214 adjusts the lengths of the elongate members 302 to align the core engine support 202 and the fan case support 204. The first height adjustment mechanism 212A includes multiple actuators 308 for adjusting the lengths of the respective elongate members 302. In some embodiments, each of the actuators 308 includes a hydraulic actuator (e.g., a hydraulic ram), a pneumatic actuator (e.g., a pneumatic ram) and an electrical actuator (e.g., an electric motor). In some embodiments, each of the actuators 308 includes at least one of a worm drive and a rack and pinion arrangement. The worm drive and/or the rack and pinion arrangement may be driven by an electrical actuator, for example, an electric motor.

In some embodiments, the core engine support 202 is substantially stationary. However, in other embodiments, the core engine support 202 may be movable with respect to the reference surface "RS". For example, the base member 304 may be movably supported on the reference surface "RS" so that the core engine support 202 and the core engine 128 can be moved in various directions, such as X, and/or Y-axes.

The core engine support 202 further includes at least one core engine level sensor 222 (interchangeably referred to as "the core engine level sensor 222"). The core engine level sensor 222 may be disposed on one of the elongate members 302. The computer-controllable unit 206 levels the core engine support 202 with respect to one or more axes based on signals from the at least one core engine level sensor 222. In some embodiments, the core engine level sensor 222 is a gyroscope. The core engine level sensor 222 may measure angular orientation of the core engine support 202 with respect to one or more axes, such as X, Y and/or Z-axes. In the illustrated embodiment, the core engine support 202 includes one core engine level sensor 222. However, the core engine support 202 may include multiple core engine level sensors 222 for measuring angles with respect to different axes. The controller 214 may adjust lengths of the elongate members 302 to level the core engine support 202 and the core engine 128 with respect to X, Y and/or Z-axes. The core engine level sensor 222 may further assist in levelling of the elongate members 302 with respect to each other. The core engine support 202 may therefore be self-levelling.

The fan case support 204 may include multiple vertical members 310 and multiple inclined members 312. Any suitable number of vertical members 310 and inclined members 312 may be used. The inclined members 312 are pivotally connected to the pair of vertical members 310 via pin joints 314. Further, the inclined members 312 are pivotally connected to each other via a pin joint 316. The vertical members 310 and the inclined members 312 form a scissor mechanism that detachably supports the fan case 130. The vertical members 310 and/or the inclined members 312 may be detachably connected to the fan case 130 by any suitable method, such as fasteners (e.g., bolts), grippers, a support platform, and so forth. In the illustrated embodiment, the vertical members 310 are disposed proximal to respective axial ends of the fan case 130. Each of the vertical members 310 and the inclined members 312 may have any suitable cross-sectional shape, such as circular, elliptical, polygonal, and so forth. Further, each of the vertical members 310 and the inclined members 312 may be solid or hollow members.

The vertical members 310 and the inclined members 312 support the fan case 130 at a height "H4" relative to the reference surface "RS". The height "H4" may be the height of a centre axis "CA2" of the fan case 130 relative to the reference surface "RS". The centre axis "CA2" may be disposed along X-axis. In some embodiments, a length of each of the vertical members 310 is adjustable such that the height "H2" of the fan case support 204 and the height "H4" of the fan case 130 are adjustable. The vertical members 310 are therefore adjustable along Z-axis. In some embodiments, the vertical members 310 are telescopic members so that their lengths are adjustable. The second height adjustment mechanism 212B adjusts the height of each vertical member 310. The computer-controllable unit 206 is configured to adjust the lengths of the vertical members 310 based on the signals received from the core engine alignment sensor 208 and/or the fan case alignment sensor 210. Specifically, the controller 214 adjusts the lengths of the vertical members 310 to align the core engine support 202 and the fan case support 204. The second height adjustment mechanism 212B includes multiple actuators 318 for adjusting the lengths of the respective vertical members 310. Each actuator 318 is disposed around the respective vertical member 310. In some embodiments, each of the actuators 318 includes a hydraulic actuator (e.g., a hydraulic ram), a pneumatic actuator (e.g., a pneumatic ram) and an electrical actuator (e.g., an electric motor). In some embodiments, each of the actuators 318 includes at least one of a worm drive and a rack and pinion arrangement. The worm drive and/or the rack and pinion arrangement may be driven by an electrical actuator, for example, an electric motor.

The computer-controllable unit 206 further includes a movement mechanism 216 for moving at least one of the core engine support 202 and the fan case support 204. The controller 214 controls the movement mechanism 216 to guide the movement of at least one of the core engine support 202 and the fan case support 204 in order to couple the core engine 128 with the fan case 130. In the illustrated embodiments, the movement mechanism 216 moves the core engine support 202, while the fan case support 204 is substantially stationary. However, in other embodiments, the movement mechanism 216 may optionally or additionally be associated with the fan case support 204.

The movement mechanism 216 further includes a drive arrangement 218 (shown in Figure 3) controllable by the controller 214, and a plurality of wheels 220 operatively coupled to the drive arrangement 218. The wheels 220 may be pneumatic wheels, solid wheels, and the like. The wheels 220 may be mounted at ends of respective vertical members 310. The wheels 220 movably support the fan case support 204. The height "H2" of the fan case support 204 may be substantially equal to a distance between a distal end of each vertical member 310 and the respective wheel 220. The drive arrangement 218 may include a prime mover (not shown) operably coupled to the wheels 220 via a transmission (not shown). The prime mover may be an electrical motor, a hydraulic motor, an internal combustion engine, and so forth. The transmission may include one or more gear trains, belt and pulley arrangements, friction drives, hydraulic drives, and the like. Only some of the wheels 220 may be driven by the drive arrangement 218, while the other wheels 220 may be non-driven. Further, two or more of the wheels 220 may be coupled to each other by axles. In some embodiments, the movement mechanism 216 further includes a steering arrangement (not shown) associated with two or more of the wheels 220 to control a direction of movement of the fan case support 204. The steering arrangement may include a rack and pinion steering mechanism, worm and sector mechanism, and so forth. In some embodiments, the movement mechanism 216 further includes a braking arrangement (not shown) associated with one or more of the wheels 220 to brake the movement of the fan case support 204 and retain the fan case support 204 in a desired position. The braking arrangement may include one or more braking members that selectively engage with respective wheels 220. The braking members may be actuated by various methods, for example, electrically, hydraulically, pneumatically, and so forth. The braking members may be brake pads or brake discs. The controller 214 may regulate the prime mover to drive the wheels 220 and guide the movement of the fan case support 204. The controller 214 may regulate a speed of the fan case support 204. The controller 214 may also control a direction of movement of the wheels 220 by the steering arrangement. The controller 214 may further selectively actuate the braking arrangement to stop the movement of the fan case support 204.

The fan case support 204 further includes a horizontal actuator 320 disposed between the vertical members 310. The horizontal actuator 320 may adjust a distance between the vertical members 310. This may enable the fan case support 204 to be used with various types of fan cases having different lengths. The horizontal actuator 320 may also enable the fan case support 204 to be easily attached to and detached from the fan case 130. For example, the horizontal actuator 320 may move the vertical members 310 away from each other to facilitate detachment of the fan case support 204 from the fan case 130. The horizontal actuator 320 may include a cylinder and rod arrangement which can be driven electrically, pneumatically and/or hydraulically. The controller 214 may control the horizontal actuator 320.

he fan case support 204 further includes at least one fan case level sensor 224 (interchangeably referred to as "the fan case level sensor 224"). The fan case level sensor 224 may be disposed on one of the vertical members 310. The computer-controllable unit 206 levels the fan case support 204 with respect to one or more axes based on signals from the at least fan case level sensor 224. In some embodiments, the fan case level sensor 224 is a gyroscope. The fan case level sensor 224 may measure angular orientation of the fan case support 204 with respect to one or more axes, such as X, Y and/or Z-axes. In the illustrated embodiment the fan case support 204 includes one fan case level sensor 224. However, the fan case support 204 may include multiple fan case level sensors 224 for measuring angles with respect to different axes. The controller 214 may adjust lengths of the vertical members 310 to level the fan case support 204 and the fan case 130 with respect to X, Y and/or Z-axes. The fan case level sensor 224 assists in levelling of the vertical members 310 with respect to each other. The fan case support 204 may therefore be self-levelling.

In some embodiments, the at least one core engine alignment sensor 208 is a laser alignment sensor. In some embodiments, the at least one fan case alignment sensor 210 is a laser alignment sensor. The core engine alignment sensor 208 may emit a laser beam. The fan case alignment sensor 210 may also emit a laser beam. In some embodiments, when laser beams from both the core engine alignment sensor 208 and the fan case alignment sensor 210 are aligned, the core engine support 202 is aligned with the fan case support 204. If the laser beams are not aligned, the computer-controllable unit 206 may adjust the core engine support 202 and/or the fan case support 204 along X, Y and/or Z-axes to align the laser beams. In some other embodiments, laser beam from the core engine alignment sensor 208 may be aligned with a target or a mark disposed on the fan case support 204 or the fan case 130. Similarly, laser beam from the fan case alignment sensor 210 may be aligned with a target or a mark disposed on the core engine support 202 or the core engine 128. In other embodiments, the core engine alignment sensor 208 is a magnetic sensor, an ultrasonic sensor, and so forth. In other embodiments, the fan case alignment sensor 210 is a magnetic sensor, an ultrasonic sensor, and so forth.

In the illustrated embodiment, the core engine support 202 includes one core engine alignment sensor 208. However, in other embodiments, the core engine support 202 may include multiple core engine alignment sensors 208 to enable alignment between the core engine 128 and the fan case 130. In the illustrated embodiment, the fan case support 204 includes one fan case alignment sensor 210. However, in other embodiments, the fan case support 204 may include multiple fan case alignment sensors 210 to enable alignment between the core engine 128 and the fan case 130.

In some embodiments, at least one of the core engine support 202 and the fan case support 204 includes a proximity sensor (not shown) to indicate whether a portion of the core engine 128 is at a desired distance with respect to a portion of the fan case 130. The fan case 130 may be disposed around the core engine 128 before assembling. The computer-controllable unit 206 may stop the movement of the fan case support 204 based on signals from the proximity sensor. The proximity sensor may be a capacitive proximity sensor, an inductive proximity sensor, an optical sensor, a magnetic sensor, an ultrasonic sensor, and so forth.

In order to assemble the core engine 128 with the fan case 130, the core engine 128 is detachably mounted on the core engine support 202 and the fan case 130 is detachably mounted on the fan case support 204. In some cases, the assembly may be performed during manufacture. In some other cases, the assembly may be performed after separation of the core engine 128 and the fan case 130 for carrying out various tasks, such as servicing, repair and replacement of one or more components. The computer-controllable unit 206 including the controller 214 may align the core engine support 202 and the fan case support 204 based on the signals from the core engine alignment sensor 208 and the fan case alignment sensor 210. The computer-controllable unit 206 may align the central axis "CA1" of the core engine 128 with the central axis "CA2" of the fan case 130 by controlling the respective first and second height adjustment mechanisms 212A, 212B. The central axes "CA1", "CA2" may be aligned with respect to X, Y and/or Z axes. Alternatively, the computer-controllable unit 206 may align one or more portions of the core engine support 202 with corresponding portions of the fan case support 204. The computer-controllable unit 206 may also perform levelling of the core engine support 202 and the fan case support 204 based on the signals from the core engine level sensor 222 and the fan case level sensor 224, respectively. Levelling of the core engine support 202 and the fan case support 204 may be performed with respect to X, Y and/or Z-axes. The computer-controllable unit 206 may further control the movement mechanism 216 to guide the movement of the fan case support 204 in order to couple the core engine 128 with the fan case 130. The computer-controllable unit 206 may guide the movement of the fan case support 204 along X and/or Y-axes. The computer-controllable unit 206 may further move the fan case support 204 such that the fan case 130 is disposed around the core engine 128. The core engine 128 may be then assembled with the fan case 130. The core engine 128 and the fan case 130 may be coupled to each other by any suitable method, for example, bolted connections, welding, brazing, and so forth. In some embodiments, the core engine 128 and the fan case 130 are automatically coupled to each other. For example, the computer-controllable unit 206 may control one or more robotic arms (not shown) to couple the core engine 128 with the fan case 130. After assembly, the core engine support 202 may be detached from the core engine 128 and the fan case support 204 may be detached from the fan case 130.

The system 200 may also allow the core engine 128 and the fan case 130 to be separated from each other for various purposes, such as servicing, repair and replacement of various components. For separating the core engine 128 and the fan case 130, the core engine 128 is detachably mounted on the core engine support 202 and the fan case 130 is detachably mounted on the fan case support 204. The computer-controllable unit 206 may then use the movement mechanism 216 to move the fan case support 204 away from the core engine support 202. After performing the required tasks, the core engine 128 and the fan case 130 may be assembled to each other.

The system 200 including the computer-controllable unit 206 may provide self-alignment and automated guidance of the core engine 128 and the fan case 130 during assembly. Automated alignment and guidance may enable the assembling process to be efficient, reliable, consistent and quicker with minimal manpower requirements as compared to conventional manual processes. Automated alignment and guidance may also allow small clearances (e.g., about 8 mm) to be accurately provided between the core engine 128 and the fan case 130. Using the system 200 may enable efficient tooling setup and supports a strategy of changing the core engine 128 at an airline overhaul base. The system 200 may allow various tasks to be performed at locations remote from a workshop environment. A floor or ground is unlikely to be even or flat at such locations. The self-levelling feature of the system 200 may allow the tasks to be carried out on uneven surfaces. Therefore, the system 200 can be used in a variety of environments. The system 200 may improve engine assembly efficiency and reduce the risk of misalignment and assembly damage. The time saved due to use of the system 200 may allow personnel to work on other important tasks, such as servicing, repair and/or replacement of one or more components (e.g., swapping propulsors).

The controller 214 of the computer-controllable unit 206 may include a processor (not shown) and a memory (not shown). The memory may include computer executable instructions that are executable by the processor to perform the logic of the computer-controllable unit 206 or portions thereof that are described above. As another example, the system 200 may include an analog to digital converter to process the signals from the various sensors, such as the core engine alignment sensor 208, the fan case alignment sensor 210, the core engine level sensor 222 and the fan case level sensor 224.

The processor and the memory may be in communication with each other. The processor may be in communication with additional components, such as the sensors and the various actuators, for example, the actuators 308 and 318. For example, the controller 214 may be communicably coupled to the various sensors and actuators by wired connections and/or wireless connections. The processor may be in communication with a user interface that may indicate to an operator values of various parameters associated with the system 200. In some embodiments, the user interface may also receive inputs from the operator. The computer-controllable unit 206 may control various parameters of the system 200 based on the inputs received from the operator.

The processor may be any device that performs logic operations. The processor may include a general processor, a central processing unit, an application specific integrated circuit (ASIC), a digital signal processor, a field programmable gate array (FPGA), a digital circuit, an analog circuit, a controller, a microcontroller, any other type of processor, or any combination thereof. The processor may include one or more components operable to execute computer executable instructions or computer code embodied in the memory.

The computer-controllable unit 206 may be implemented in many different ways. The logic of the computer-controllable unit 206 may be implemented in one or more modules comprising hardware or a combination of hardware and software. For example, each module may include an application specific integrated circuit (ASIC), a Field Programmable Gate Array (FPGA), a circuit, a digital logic circuit, an analog circuit, a combination of discrete circuits, gates, or any other type of hardware or combination thereof. Alternatively or in addition, each module may include memory hardware, such as a portion of the memory, for example, that comprises instructions executable with the processor or other processor to implement one or more of the features of the module. When any one of the modules includes the portion of the memory that comprises instructions executable with the processor, the module may or may not include the processor. In some examples, each module may just be the portion of the memory or other physical memory that comprises instructions executable with the processor or other processor to implement the logic of the corresponding module without the module including any other hardware.

Some of the features of the computer-controllable unit 206 may be stored in a computer readable storage medium (for example, as logic implemented as computer executable instructions or as data structures in memory). All or part of the computer-controllable unit 206 and its logic and data structures may be stored on, distributed across, or read from one or more types of computer readable storage media. Examples of the computer readable storage medium may include a hard disk, a floppy disk, a CD-ROM, a flash drive, a cache, volatile memory, non-volatile memory, RAM, flash memory, or any other type of computer readable storage medium or storage media. The computer readable storage medium may include any type of non-transitory computer readable medium, such as a CD-ROM, a volatile memory, a non-volatile memory, ROM, RAM, or any other suitable storage device.

The processing capability of the computer-controllable unit 206 may be distributed among multiple entities, such as among multiple processors and memories, optionally including multiple distributed processing systems. Parameters, databases, and other data structures may be separately stored and managed, may be incorporated into a single memory or database, may be logically and physically organized in many different ways, and may implemented with different types of data structures such as linked lists, hash tables, or implicit storage mechanisms. Logic, such as programs or circuitry, may be combined or split among multiple programs, distributed across several memories and processors, and may be implemented in a library, such as a shared library (for example, a dynamic link library (DLL)).

As mentioned above, the system may be especially useful for assembling turbofan engines that have a high bypass ratio. The bypass ratio is defined as the ratio of the mass flow rate of the flow through the bypass duct to the mass flow rate of the flow through the core at cruise conditions. In some embodiments the bypass ratio of the gas turbine engine may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

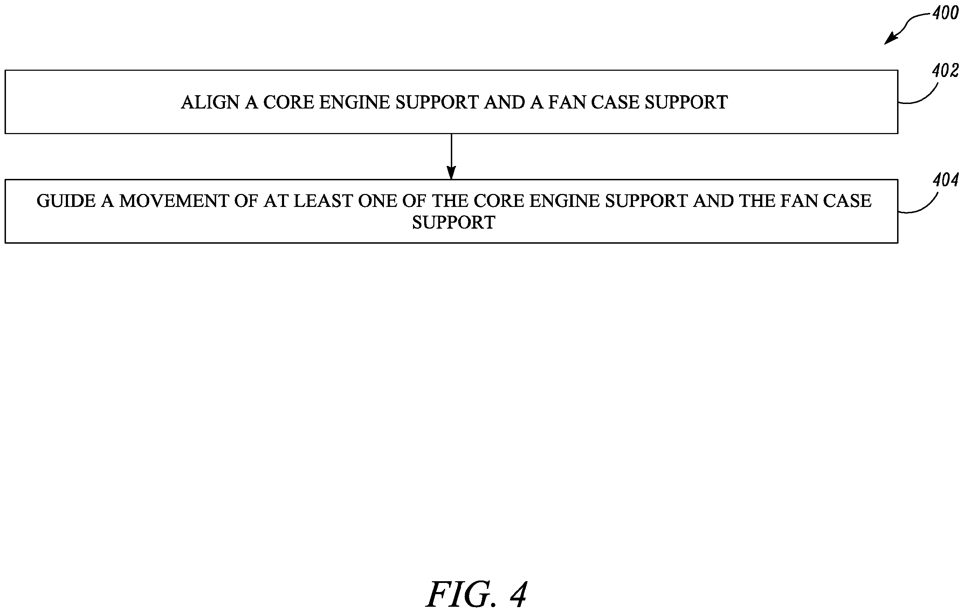

**Figure 4** illustrates a computer-controlled method 400 of assembling the core engine 128 (shown in Figures 1 and 2) and the fan case 130 (shown in Figures 1 and 2) of the gas turbine engine 100. The computer-controlled method 400 may be implemented by the system 200 of Figures 2 and 3. The computer-controlled method 400 includes various steps as described below.

At step 402, the computer-controlled method 400 includes aligning the core engine support 202 that detachably supports the core engine 128 and the fan case support 204 that detachably supports the fan case 130. In some embodiments, the computer-controllable unit 206 aligns the core engine support 202 and the fan case support 204 based on the signals from the core engine alignment sensor 208 and the fan case alignment sensor 210.

At step 404, the computer-controlled method 400 includes guiding the movement of at least one of the core engine support 202 and the fan case support 204 to couple the core engine 128 with the fan case 130. In some embodiments, the computer-controllable unit 206 guides the movement of the fan case support 204 using the movement mechanism 216.

In some embodiments, the computer-controlled method 400 further includes levelling at least one of the core engine support 202 and the fan case support 204 with respect to one or more axes. In some embodiments, the computer-controllable unit 206 levels the core engine support 202 based on the signals from the core engine level sensor 222. The computer-controllable unit 206 may use the first height adjustment mechanism 212A for levelling the core engine support 202. Further, the computer-controllable unit 206 levels the fan case support 204 based on the signals from the fan case level sensor 224. The computer-controllable unit 206 may use the second height adjustment mechanism 212B for levelling the fan case support 204.

In some embodiments, the gas turbine engine 100 is assembled by the computer-controlled method 400.

The computer-controlled method 400 may provide self-alignment and automated guidance of the core engine 128 and the fan case 130 during assembly. Automated alignment and guidance may enable the assembling process to be efficient, reliable, consistent and faster with minimal manpower requirements as compared to conventional manual processes.

All of the discussion, regardless of the particular implementation described, is exemplary in nature, rather than limiting. For example, although selected aspects, features, or components of the implementations are depicted as being stored in memories, all or part of the system or systems may be stored on, distributed across, or read from other computer readable storage media, for example, secondary storage devices such as hard disks, flash memory drives, floppy disks, and CD-ROMs. Moreover, the various modules and screen display functionality is but one example of such functionality and any other configurations encompassing similar functionality are possible.

The respective logic, software or instructions for implementing the processes, methods and/or techniques discussed above may be provided on computer readable storage media. The functions, acts or tasks illustrated in the figures or described herein may be executed in response to one or more sets of logic or instructions stored in or on computer readable media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the logic or instructions are stored in a remote location for transfer through a computer network or over telephone lines. In yet other embodiments, the logic or instructions are stored within a given computer, central processing unit ("CPU"), graphics processing unit ("GPU"), or system.

Furthermore, although specific components are described above, methods, systems, and articles of manufacture described herein may include additional, fewer, or different components. For example, a processor may be implemented as a microprocessor, microcontroller, application specific integrated circuit (ASIC), discrete logic, or a combination of other type of circuits or logic. Similarly, memories may be DRAM, SRAM, Flash or any other type of memory. Flags, data, databases, tables, entities, and other data structures may be separately stored and managed, may be incorporated into a single memory or database, may be distributed, or may be logically and physically organized in many different ways. The components may operate independently or be part of a same program or apparatus. The components may be resident on separate hardware, such as separate removable circuit boards, or share common hardware, such as a same memory and processor for implementing instructions from the memory. Programs may be parts of a single program, separate programs, or distributed across several memories and processors.

It will be understood that the invention is not limited to the embodiments above-described and various modifications and improvements can be made without departing from the concepts described herein with the scope of the following claims. Except where mutually exclusive, any of the features may be employed separately or in combination with any other features and the disclosure extends to and includes all combinations and sub-combinations of one or more features described herein.

## Claims

1. A system (200) for assembling a core engine (128) and a fan case (130) of a gas turbine engine (100), the system (200) comprising:
a core engine support (202) that detachably supports the core engine (128), the core engine support (202) comprising at least one core engine alignment sensor (208);
a fan case support (204) that detachably supports the fan case (130), the fan case support (204) comprising at least one fan case alignment sensor (210); and
a computer-controllable unit (206) configured to:
align the core engine support (202) and the fan case support (204) based on signals from the at least one core engine alignment sensor (208) and the at least one fan case alignment sensor (210); and
guide a movement of at least one of the core engine support (202) and the fan case support (204) to couple the core engine (128) with the fan case (130).

2. The system (200) according to claim 1, wherein the computer-controllable unit (206) further comprises:
a height adjustment mechanism (212) for adjusting a height of at least one of the core engine support (202) and the fan case support (204); and
a controller (214) that controls the height adjustment mechanism (212) based on the signals from the at least one core engine alignment sensor (208) and the at least one fan case alignment sensor (210) in order to align the core engine support (202) and the fan case support (204).

3. The system (200) according to claim 2, wherein the height adjustment mechanism (212) comprises one or more of a hydraulic actuator, a pneumatic actuator and an electrical actuator.

4. The system (200) according to claim 2, wherein the height adjustment mechanism (212) comprises at least one of a worm drive and a rack and pinion arrangement.

5. The system (200) according to any one of claims 2 to 4, wherein the computer-controllable unit (206) further comprises a movement mechanism (216) for moving at least one of the core engine support (202) and the fan case support (204), and wherein the controller controls the movement mechanism (216) to guide the movement of at least one of the core engine support (202) and the fan case support (204) in order to couple the core engine (128) with the fan case (130).

6. The system (200) according to claim 5, wherein the movement mechanism further (216) comprises:
a drive arrangement (218) controllable by the controller (214); and
a plurality of wheels (220) operatively coupled to the drive arrangement (218).

7. The system (200) according to any preceding claim, wherein the core engine support (202) further comprises at least one core engine level sensor (222), and wherein the computer-controllable unit (206) levels the core engine support (202) with respect to one or more axes based on signals from the at least one core engine level sensor (222).

8. The system (200) according to claim 7, wherein the at least one core engine level sensor (222) is a gyroscope.

9. The system (200) according to any preceding claim, wherein the fan case support (204) further comprises at least one fan case level sensor (224), and wherein the computer-controllable unit (206) levels the fan case support (204) with respect to one or more axes based on signals from the at least one fan case level sensor (224).

10. The system (200) according to claim 9, wherein the at least one fan case level sensor (224) is a gyroscope.

11. The system (200) according to any preceding claim, wherein the at least one core engine alignment sensor (208) is a laser alignment sensor.

12. The system (200) according to any preceding claim, wherein the at least one fan case alignment sensor (210) is a laser alignment sensor.

13. A computer-controlled method (400) of assembling a core engine (128) and a fan case (130) of a gas turbine engine (100), the computer-controlled method (400) comprising the steps of:
aligning a core engine support (202) that detachably supports the core engine (128) and a fan case support (204) that detachably supports the fan case (130) based on signals from at least one core engine alignment sensor (208) and at least one fan case alignment sensor (210) respectively; and
guiding a movement of at least one of the core engine support (202) and the fan case support (204) to couple the core engine (128) with the fan case (130).

14. The computer-controlled method (400) according to claim 13, further comprising levelling at least one of the core engine support (202) and the fan case support (204) with respect to one or more axes.

15. A gas turbine engine (100) assembled by the computer-controlled method (400) according to claim 13 or 14.
